# EUROPÄISCHE PATENTANMELDUNG

(11) **EP 2 401 900 A1**
(43) Veröffentlichungstag der Anmeldung: **04.01.2012**
(21) Anmeldenummer: 11401532.4
(22) Anmeldetag: 23.06.2011
(51) Int. Cl.: A01B 49/06, A01C 7/06

(54) **Landwirschaftliche Bestellkombination**

(30) Priorität: 29.06.2010 DE 102010017631
(71) Anmelder: Amazonen-Werke H. Dreyer GmbH & Co. KG, 49205 Hasbergen (DE)
(72) Erfinder: Reinke, Wilfried, 26123 Oldenburg (DE); Tiessen, Reimer Uwe, 26135 Oldenburg (DE)

(57) **Zusammenfassung**

Landwirtschaftliche Bestellkombination zur gleichzeitigen Ablage von Düngemitteln und Saatgut im Boden mit folgenden in Fahrtrichtung in folgender Weise hintereinander angeordneten Bauteilen:
- den Boden streifenweise tief lockernden Tiefenlockererschare (5), auf deren Rückseite Düngerablegeeinrichtungen (7), die im unteren Bereich der Tiefenlockererschare (5) ausmünden, angeordnet sind,
- den Boden in voneinander beabstandeten Streifen (12) streifenweise lockernden und krümelnden, um aufrechte Achse rotierend angetriebenen Bodenbearbeitungswerkzeugen (10,13),
- Säfurchen in den von den Bodenbearbeitungswerkzeuge (10,13) bearbeiteten Bodenstreifen ziehenden und das Saatgut im Boden ablegenden Säscharen (16),
- das Saatgut in den Säfurchen (15) andrückenden walzen- und/oder radartigen Elementen (17).

## Beschreibung

Die Erfindung betrifft eine landwirtschaftliche Bestellkombination.

Durch die US 5461993 ist eine landwirtschaftliche Bestellkombination bekannt. Diese Bestellkombination weist motorisch angetriebene Bodenbearbeitungswerkzeuge auf, um den Boden aufzulockern. Vor dem Bodenbearbeitungswerkzeug wird über eine im Abstand zur Bodenoberfläche endende Leitung Dünger auf die Bodenoberfläche gestreut. Dieser auf die Bodenoberfläche gestreute Dünger wird dann von dem Bodenbearbeitungswerkzeug in den Boden eingearbeitet. Hinter dem Bodenbearbeitungswerkzeug enden mit Abstand zu Bodenoberfläche Leitungen, über welche Saatgut auf der Bodenoberfläche abgelegt wird. Hinter den Saatgutleitungen ist eine Bodenwalze, welche den Boden und das Saatgut angedrückt, angeordnet.

Durch die US 3701327 ist eine weitere landwirtschaftliche Bestellkombination bekannt. Durch ein vorderes Scheibensech wird jeweils eine Furche in den Boden geschnitten. Mittels jeweils eines hinter den Scheibensechen angeordneten Doppelscheibenschares wird eine Erweiterung der jeweiligen Furche vorgenommen. In in die jeweilige erweiterte Furche wird über eine Leitung Dünger abgelegt. Im Abstand hinter dieser Düngerablegeeinrichtung ist eine Säeinrichtung angeordnet, welche Scheibensäschare aufweist, über welches Saatgut im Boden abgelegt wird. Hinter der Saatgutablageeinrichtung ist eine Andruckrolle angeordnet.

Durch die EP 0 416 374 B1 ist eine weitere landwirtschaftliche Bestellkombination bekannt. Diese Bestellkombination weist Tiefenlockerer auf, welche den Boden in größerer Tiefe auflockern. Hinter den Tiefenlockerern ist eine motorisch angetriebene Kreiselegge angeordnet. Hinter der Kreiselegge ist eine Walze angeordnet, welche die den von den Kreiseln der Kreiselegge aufgelockerten Boden wieder angedrückt. Hinter der Walze sind Säschare angeordnet, über welche Saatgut im Boden abgelegt wird.
Düngerablegeeinrichtungen sind hier nicht vorgesehen.

Durch die DE 25 19 648 A1 ist eine weitere landwirtschaftliche Bestellkombination vorgesehen, welche aus einer Kreiselegge und dahinter angeordneten Einzelkornsägeräten besteht. Nur jeder zweite Kreisel der Kreiselegge weist einen Zinken auf, mit welchem der Boden in beabstandeten Streifen zueinander bearbeitet bzw. aufgelockert wird.

Zur Reduzierung des Energieverbrauchers werden gemäß dem vorgenannten Stand der Technik Ackerflächen teilweise nur streifenweise bearbeitet. Dieses geschieht vielfach mit Maschinen in mehreren Schritten oder teilweise sind die Geräte auch zu Kombinationen zusammen gefasst. Nachteilig ist jedoch bei allen Geräten, dass der Dünger auf dem Boden aufgebracht oder nahe der Bodenoberfläche in den Boden eingebracht wird. Die Ablage des Düngers wird nicht oder lässt sich nicht an die spezifische Wurzelausbreitung der Pflanzen anpassen.

Der Erfindung liegt die Aufgabe zugrunde, eine Bestellkombination zu schaffen, mittels welcher sich die Ablage des Düngers an die spezifische Wurzelausbreitung der Pflanzen anpassen lässt.

Diese Aufgabe wird erfindungsgemäß durch eine landwirtschaftliche Bestellkombination zur gleichzeitigen Ablage von Düngemitteln und Saatgut im Boden mit folgenden in Fahrtrichtung in folgender Weise hintereinander angeordneten Bauteilen:
- den Boden streifenweise tief lockernden Tiefenlockererschare, auf deren Rückseite Düngerablegeeinrichtungen, die im unteren Bereich der Tiefenlockererschare ausmünden, angeordnet sind,
- den Boden in voneinander beabstandeten Streifen streifenweise lockernden und krümelnden , um aufrechte Achse rotierend angetriebenen Bodenbearbeitungswerkzeugen,
- Säfurchen in den von den Bodenbearbeitungswerkzeuge bearbeiteten Bodenstreifen ziehenden und das Saatgut im Boden ablegenden Säscharen,
- das Saatgut in den Säfurchen andrückenden walzen- und/oder radartigen Elementen, gelöst.

Infolge dieser Maßnahmen lässt sich der Dünger durch die Ablage über die den Tiefenlockern zugeordneten Düngerablegeeinrichtungen sowohl in der Tiefe als auch in der Breite der Pflanzen in besonders vorteilhafter Weise anpassen. Die jeweilige Verteilungsbreite des Düngers wird mithilfe eines hinter den Scharstielen der Tiefenlockerer angeordneten Verteilensorgans erreicht. In überraschender Weise hat des sich gezeigt, dass die Düngerausbringung mittels eines den Boden vorlockernden und den Dünger in großer Tiefe ablegenden Elementen erhebliche Vorteile hat. Mit der anschließenden streifenartigen Bodenbearbeitung durch nur in einer geringen Breite arbeitenden Kreiselwerkzeuge wird in die von dem Tiefenlockerer hinterlassene Furche geschlossen und der Boden gekrümelt, so dass in diesem bearbeiteten Bodenstreifen das Saatgut in pflanzengerechter Weise abgelegt werden kann. Die durch die Walzenelemente vorgenommene Rückverfestigung wirkt sich auf die Keimbedingungen für die Pflanzen positiv aus.

Eine vorteilhafte Düngerablage wird dadurch gewährleistet, dass die Arbeitstiefe der Tiefenlockererschare mindestens 20 cm beträgt.

Um den Boden in optimaler Breite streifenweise bearbeiten zu können, ist vorgesehen, dass die Arbeitsbreiten der den Boden streifenweise bearbeitenden Bodenbearbeitungswerkzeuge zwischen 10 und 20 cm beträgt.

Weitere Einzelheiten der Erfindung sind der Beispielsbeschreibung und den Zeichnungen zu entnehmen.

### Hierbei zeigen

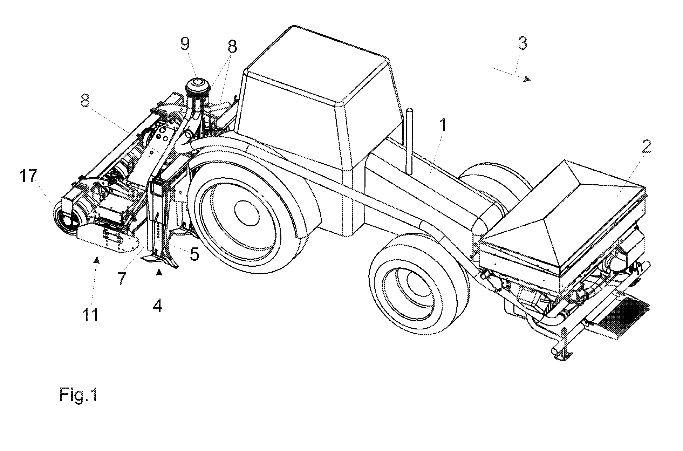

- Fig. 1: die landwirtschaftliche Bestellkombination in perspektivischer Darstellung,

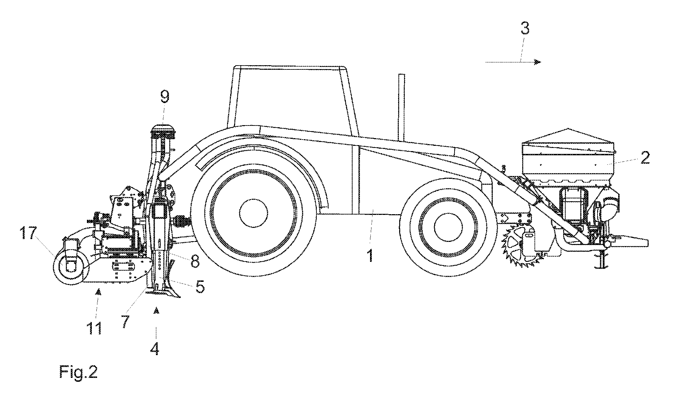

- Fig. 2: die landwirtschaftliche Bestellkombination in Seitenansicht,

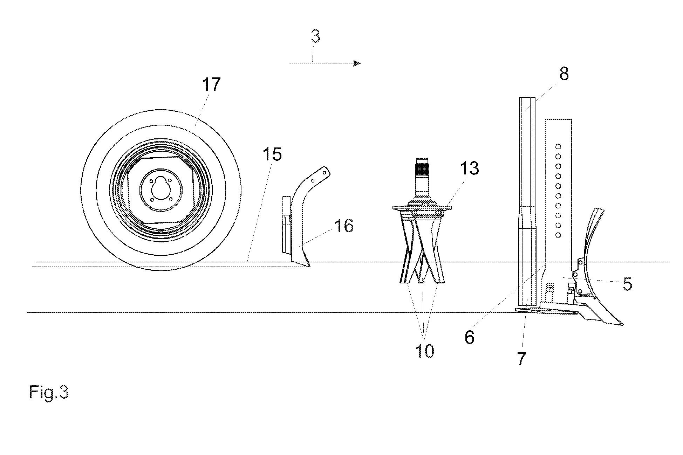

- Fig. 3: die Werkzeuge der landwirtschaftlichen Bestellkombination in Seitenansicht und Prinzipdarstellung und

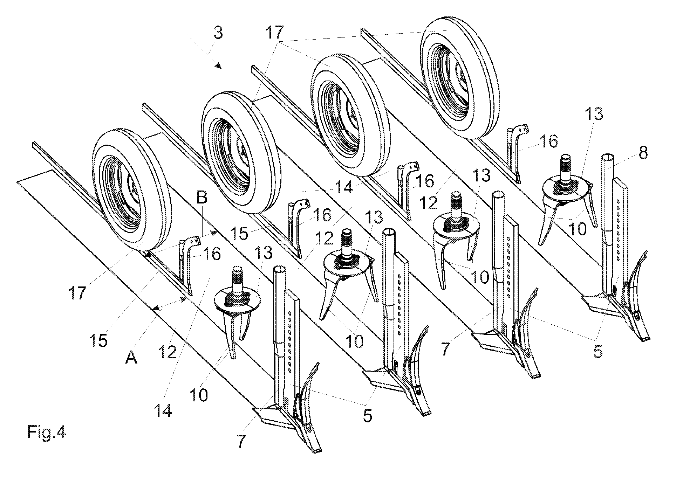

- Fig.4: die Werkzeuge der landwirtschaftlichen Bestellkombination in perspektivischer Darstellung und Prinzipdarstellung.

Die landwirtschaftliche Bestellkombination zur gleichzeitigen Ablage von Düngemitteln und Saatgut im Boden weist die auf der Rückseite eines Ackerschleppers 1 angeordneten Bodenbearbeitungswerkzeuge und Dünger- und Saatgutablageeinrichtungen sowie auf der Vorderseite der Vorratsbehälter 2 mit Dosiereinrichtung für die auszubringenden Düngemittel auf.

Die auf der Rückseite des Ackerschleppers 1 angeordneten Bauteile der Bestellkombination sind folgende:

In Fahrtrichtung zunächst als erstes Bearbeitungswerkzeug ist ein den Boden streifenweise tief lockernder Tiefenlockerer 4 mit den Tiefenlockerscharen 5 angeordnet. Auf der Rückseite 6 der Tiefenlockererschare 5 sind die Düngerablegeeinrichtungen 7, die im unteren Bereich 8 der Tiefenlockererschare 5 ausmünden, angeordnet. Diesen Ablegeeinrichtungen 7 werden über Düngerleitungen 8 über den Verteilerkopf 9 die Düngemittel in einstellbaren Mengen zugeleitet. Der Verteilerkopf 9 ist über eine pneumatische Zuleitung mit der Dosiereinrichtung des auf der Vorderseite des Ackerschleppers 1 angeordneten Vorratsbehälters 2 verbunden. Von hier aus wird dem Verteilerkopf 9 die auszubringenden Düngemittel zugeleitet.

Über die Düngerablegereinrichtungen 7 werden die Düngemittel auf der unteren Ebene, in welcher die Tiefenlockererschare 5 den Boden lockern, der Dünger im Boden abgelegt. Die Arbeitstiefe der Tiefenlockererschare 5 beträgt mindestens 20 cm.

Hinter den Tiefenlockererschare 5 sind fluchtend mit den Tiefenlockererscharen 5 die um aufrechte Achsen rotierend angetriebene Bodenbearbeitungswerkzeuge 10 einer Kreiselegge 11 angeordnet. Diese Kreiselwerkzeuge 10 lockern und krümeln den Boden streifenweise in voneinander beabstandeten Streifen 12. Dieses lässt sich in einfacher Weise beispielsweise dadurch verwirklichen, dass nur an jedem zweiten Kreisel 13 einer Kreiselegge 11 ein oder zwei Kreiselzinken 10 angeordnet sind. Die Arbeitsbreiten A der den Boden streifenweise bearbeitenden und als Kreiselzinken 10 ausgebildeten Bodenbearbeitungswerkzeuge beträgt zwischen 10 und 20 cm. Der Abstand B zwischen den streifenweise bearbeitenden Bodenstreifen 12, d.h. der Bereich 14, der nicht bearbeitet ist bzw. bearbeitet wird, hängt davon ab, welche Saatgutart ausgebracht wird.

Hinter den Kreiselwerkzeugen 10 sind in den streifenweise bearbeiteten Bodenstreifen 12 Säfurchen 16 in den Boden ziehenden und das Saatgut im Boden ablegenden Säscharen 16 angeordnet. Den Säscharen 16 werden über nicht dargestellte Saatgutleitungen und einem nicht dargestellten Vorratsbehälter mit Dosier- und Verteileinrichtungen in einstellbarer Weise die auszubringenden Saatgüter zugeleitet.

Hinter den Säscharen 16 sind das Saatgut in den Säfurchen 15 andrückende walzen- und/oder radartige Elemente 17 angeordnet. Diese Elemente 17 sind fluchtend hinter den Säscharen 16 angeordnet.

Somit wird also zunächst durch die Tiefenlockererschare 5 der Boden streifenweise tief gelockert und gleichzeitig der Dünger in größerer Tiefe als das Saatgut im Boden abgelegt. Mittels der den Tiefenlockererschare 5 folgenden und den Boden streifenweise bearbeitenden Kreiselwerkzeuge 10 wird der Boden streifenweise aufgelockert und/oder gekrümelt. In diesem streifenweise bearbeiteten und gekrümelten auf das wird mittels der Säschare 16 in den von diesen gezogenen Säfurchen 15 das Saatgut abgelegt. Durch die nachfolgenden walzen- und/oder radartigen Elemente 17 wird das Saatgut in den Säfurchen 15 angedrückt. Diesen walzen- und/oder radartigen Elementen 17 kann noch ein nicht dargestellter Striegel folgen. Dieser Striegel kann auch zwischen den Säscharen 16 und den walzen- und/oder radartigen Elementen 17 angeordnet sein.

## Patentansprüche

1. Landwirtschaftliche Bestellkombination zur gleichzeitigen Ablage von Düngemitteln und Saatgut im Boden mit folgenden in Fahrtrichtung in folgender Weise hintereinander angeordneten Bauteilen:
- den Boden streifenweise tief lockernden Tiefenlockererschare (5), auf deren Rückseite Düngerablegeeinrichtungen (7), die im unteren Bereich der Tiefenlockererschare (5) ausmünden, angeordnet sind,
- den Boden in voneinander beabstandeten Streifen ( 12) streifenweise lockernden und krümelnden , um aufrechte Achse rotierend angetriebenen Bodenbearbeitungswerkzeugen (10, 13),
- Säfurchen in den von den Bodenbearbeitungswerkzeuge (10, 13) bearbeiteten Bodenstreifen ziehenden und das Saatgut im Boden ablegenden Säscharen (16),
- das Saatgut in den Säfurchen (15) andrückenden walzen- und/oder radartigen Elementen (17).

2. Landwirtschaftliche Bestellkombination nach Anspruch 1, **dadurch gekennzeichnet, dass** die Arbeitstiefe der Tiefenlockererschare (5) mindestens 20 cm beträgt.

3. landwirtschaftliche Bestellkombination nach Anspruch 1, **dadurch gekennzeichnet, dass** die Arbeitsbreiten (A) der den Boden streifenweise bearbeitenden Bodenbearbeitungswerkzeuge (10, 13) zwischen 10 und 20 cm beträgt.
